# FASCICULE DE BREVET EUROPEEN

(11) **EP 0 818 167 B1**
(45) Date de publication et mention de la délivrance du brevet: **26.03.2003**
(21) Numéro de dépôt: 97830338.6
(22) Date de dépôt: 04.07.1997
(51) Int. Cl.: A47J 36/10

(54) **Recipient thermique specialement pour plats en pyrex**
Thermisches Gefäss insbesondere für Pyrex-Geschirre
Thermal recipient in particular for pyrex plates

(30) Priorité: 09.07.1996 IT BS960058 U
(43) Date de publication de la demande: 14.01.1998
(73) Titulaire: Ater S.r.l., 28010 Colazza (Novara) (IT)
(72) Inventeur: Terracciano, Simone, 20146 Milano (IT); Terracciano, Stefano Benedetto, 20090 Buccinasco (Milano) (IT)
(74) Mandataire: Manzoni, Alessandro

(56) Documents cités:
- DE-C- 835 341
- DE-C- 3 343 761
- DE-U- 9 005 985
- FR-A- 382 195
- US-A- 1 765 072
- US-A- 2 843 440

## Description

L'invention présente concerne les récipients de cuisine, et en particulier un récipient thermique conçu spécialement, mais pas exclusivement, pour un plats en pyrex.

On connaît déjà un type de récipient utilisé pour renfermer, transporter et conserver le contenu thermique de récipients pour aliments, comme les plats en pyrex. Un tel récipient connu possède un corps en matériau thermoisolant et est équipé d'un couvercle de fermeture hermétique. Normalement, le couvercle est bloqué solidement sur le corps au moyen d'un dispositif de fermeture à baïonnette.

Le document US-A 2 843 440 décrit une boîte (conforme au préambule de la revendication 1) ayant deux éléments superposés, une base et un couvercle, reliés entre eux par deux poignées. Ces poignées sont mobiles en direction radiale par rapport au couvercle, une partie de ces poignées se superposant au bord du couvercle lorsque la boîte est fermée.

L'invention présente vise à offrir un récipient thermique du type cité ci-dessus dans lequel corps et couvercle sont bloqués l'un sur l'autre à travers une combinaison d'éléments à déplacement linéaire permettant de rendre l'ensemble plus simple et plus pratique à utiliser.

Cet objectif s'obtient grâce à un récipient conforme à la revendication 1.

Les détails supplémentaires sur cette invention seront plus éloquents si nous poursuivons cette description en nous référant aux dessins en annexe, où, à titre d'exemple et non restrictif:

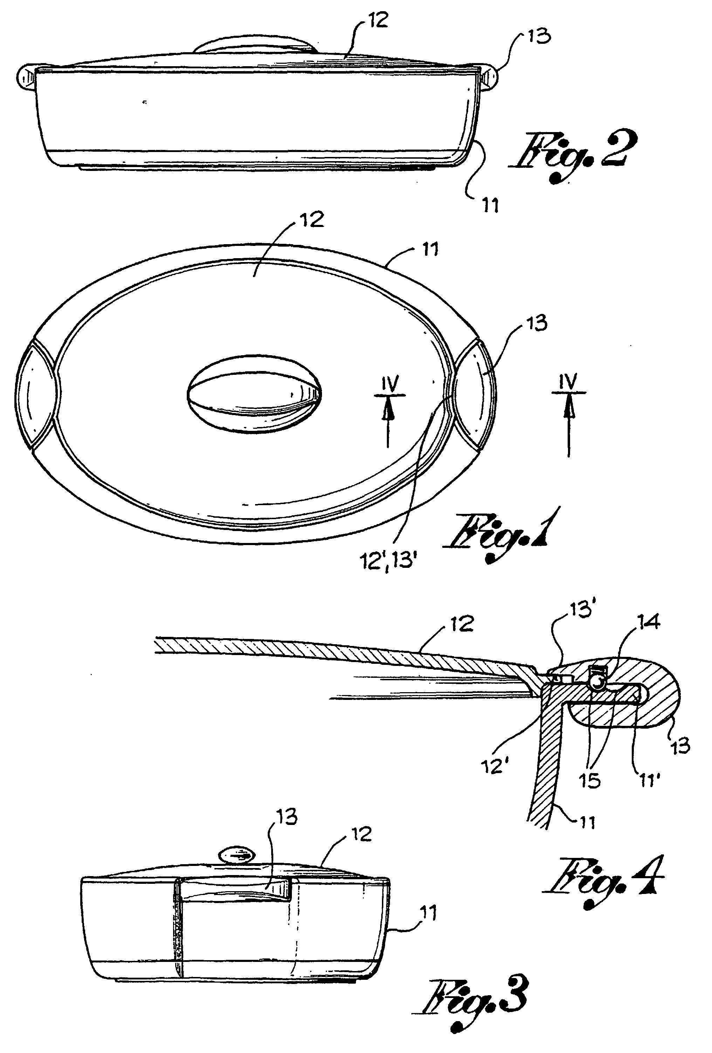

la Fig. 1 représente d'une façon schématique une vue de haut du récipient faisant l'objet de l'invention;
la Fig. 2 représente une vue de côté;
la Fig. 3 représente une vue de son extrémité, c'est à dire du côté d'une poignée;
la Fig. 4 représente une coupe partielle suivant la ligne IV-IV sur la Fig. 1.

Le récipient faisant l'objet de l'invention est composé par un corps 11 et un couvercle 12, l'un et l'autre en matériau isolant approprié. Le corps 11 présente, sur deux côtés opposés de son bord, deux oreilles 11' sur chacune desquelles est montée une poignée 13. Les deux poignées 13 sont guidées et peuvent décrire un mouvement linéaire vers l'intérieur et vers l'extérieur du récipient pour se placer dans deux positions extrêmes définies par des dispositifs supplémentaires d'arrêt, qui consistent en une bille 14 encoches 15 coopérant alternativement avec deux comme le montre le détail représenté en Fig. 4.

Chacune des poignées 13 possède un bec de blocage 13' tourné vers l'intérieur du corps 11.

Le couvercle 12 s'ajuste et se centre de façon appropriée sur le corps 11. Il a, au niveau de chaque poignée 13, un gradin 12' sur lequel s'engage le bec de blocage 13' de la même poignée une fois que cette dernière s'est déplacée vers l'intérieur du récipient comme le montrent les croquis.

Ainsi, pour bloquer le couvercle 12 sur le corps 11 après l'avoir posé, il suffit simplement de déplacer les poignées 13 vers le couvercle, sans aucun autre mouvement de rotation ou autre, jusqu'à superposer leur bec 13' avec le gradin 12' du couvercle. Pour débloquer le couvercle et ainsi ouvrir le récipient, il suffit très simplement d'éloigner les poignées du couvercle de façon à libérer ce dernier.

## Revendications

1. Récipient thermique de cuisine, en particulier pour contenir et transporter un plat en pyrex contenant des aliments chauds et conserver leur température, ledit récipient comprenant un corps (11) et un couvercle (12) en matériau approprié, ledit corps (11) présentant deux poignées opposées (13) susceptibles d'effectuer des déplacements linéaires vers l'intérieur et vers l'extérieur du récipient, lesdites poignées étant destinées à se superposer avec des parties (12') du couvercle (12), le bloquant ainsi solidement quand elles sont déplacées vers l'intérieur du corps, et le débloquant lorsqu'elles sont déplacées vers l'extérieur, les poignées (13) étant montées sur des oreilles (11') présentes sur les deux côtés opposés du bord du corps (11) et possédant chacune un bec de blocage (13') tourné vers l'intérieur du corps, le couvercle (12) présentant deux gradins (12') en correspondance avec lesdites poignées, sur lesquels les becs de blocage (13') des poignées (13) se superposent et s'engagent lorsque ces dernières sont déplacées vers l'intérieur du corps, **caractérisé en ce que** lesdites oreilles (11') et lesdites poignées (13) possèdent des moyens d'arrêt supplémentaires qui consistent sur chacun desdits côtés en une bille (14) sur la poignée coopérant alternativement avec deux encoches (15) sur l'oreille correspondante pour définir les positions de blocage et de déblocage du couvercle par rapport au corps.

## Claims

1. Thermal kitchen container, intended in particular to contain and carry pyrex dishes containing hot food and to maintain the temperature; comprising a body (11) and a lid (12) of appropriate material, **characterised in that** said body (11) is fitted with two opposing handles that can be moved linearly towards the inside or the outside of the container, **in that** said handles are positioned above parts (12') of the lid (12), locking it when they are moved inwards and releasing it when they are moved outwards, said handles (13) being mounted on projections (11') on the two opposing sides of the edge of the body (11), and each having a locking elements (13') facing towards the centre of the body; **in that** the lid (12) presents two steps (12') in correspondence with said handles, on which the locking elements (13') of the handles (13) overlap and engage when the handles are moved towards the centre of the body; and **in that** said projections (11') and said handles (13) are equipped with complementary locking means on either side that consist of a ball (14) on the handle that alternately engages two slots (15) in the corresponding projection to determine the locking and the release position of the lid with respect to the body.

## Patentansprüche

1. Küchenwärmebehälter, insbesondere zur Unterbringung und zur Beförderung von Pyrexglasschüsseln mit warmen Speisen, um deren Temperatur aufrechtzuerhalten. Bestehend aus einem Körper (11) und einem Deckel (12) aus geeignetem Material, die sich dadurch kennzeichnen, dass der besagte Körper (11) mit zwei gegenüberliegenden Griffen (13) ausgestattet ist, die sich linear nach innen und außen des Behälters bewegen; dass sich besagte Griffe über Teile (12') des Deckels (12) legen und diesen blockieren, wenn sie nach innen gerichtet sind, und ihn freigeben, wenn sie nach außen des Körpers gerichtet sind, da sie (13) auf Ohren (11') montiert sind, die auf den beiden gegenüberliegenden Rändern des Körpers (11) vorgesehen sind und jeweils mit einem nach innen des Körpers gerichteten Klemmschnabel (13') versehen sind; dadurch, dass der Deckel (12) zwei Stufen (12') auf gleicher Höhe der Griffe aufweist, auf denen sich die Klemmschnäbel (13') der Griffe (13) legen und einhaken, wenn diese nach innen des Körpers bewegt werden, und dadurch, dass besagte Ohren (11') und besagte Griffe (13) mit zusätzlichen Feststellvorrichtungen an beiden Seiten versehen sind, die aus einer auf dem Griff vorgesehen Kugel (14) bestehen, die wechselweise mit zwei auf dem betreffenden Ohr vorgesehenen Kerben (15) kooperieren, um die Sperr- und Entsperrposition des Deckels bezüglich des Körpers zu definieren.
